# EUROPEAN PATENT APPLICATION

(11) **EP 2 693 253 A1**
(43) Date of publication of application: **05.02.2014**
(21) Application number: 13174129.0
(22) Date of filing: 27.06.2013
(51) Int. Cl.: G02B 26/08, G03B 21/20, G02B 27/01, G02B 6/42

(54) **Windshield display system**

(30) Priority: 31.07.2012 US 201213562352
(71) Applicant: Delphi Technologies, Inc., Troy, MI 48007 (US)
(72) Inventor: Kuhlman, Frederick F., Kokomo, IN Indiana 46902 (US); Sarma, Dwadasi H.R., West Lafayette, IN Indiana 47906 (US); Lambert, David K., Sterling Heights, MI Michigan 48310 (US); Stark, Kris R., Carmel, IN Indiana 46033 (US)
(74) Representative: Robert, Vincent

(57) **Abstract**

A windshield display system (10) that includes a light source (20) such as a laser (30B) configured to project light from a plurality of source locations (22A, 22B, 22C, 22D, 22E) onto a desired location (18) of a windshield (12). The number of source locations (22A, 22B, 22C, 22D, 22E) and relative spacing apart of the source locations (22A, 22B, 22C, 22D, 22E) is such that light emitted from the source locations (22A, 22B, 22C, 22D, 22E) and reflected into an eye (28) of an operator (16) is characterized as having a reflected light power less than a power threshold necessary to fulfil a laser safety standard. A camera (52 aiming at the projection area may be used to align the plurality of light beams.

## Description

### TECHNICAL FIELD OF INVENTION

This disclosure generally relates to windshield display systems, and more particularly relates to a windshield display that uses a combination of converging laser beams to distribute light reflected by a windshield in order to meet laser safety standards and still obtain adequate display brightness.

### BACKGROUND OF INVENTION

Display systems that display information on the windshield of a vehicle are known. Display systems that use a vectored laser beams to draw images on a fluorescent windshield have been proposed. A standard has been issued by the International Electrotechnical Commission (IEC) that such a system should meet the "class 2" laser safety standard specified in IEC 60825-1 (second edition 2007-03). To meet this safety standard, a laser beam that could pass through the pupil of a human eye and onto the retina should have a power rating of less than one milli-Watt (1mW). However, some windshield display systems, in particular systems that illuminate a fluorescing coating on the windshield to obtain visible light, typically require about one hundred milli-Watts (100mW) of illuminating power to be visible in daylight conditions. It has been observed that five percent (5%) of the illuminating light impinging on such a windshield may be reflected, and so the reflected power from 100mW is five milli-Watts (5mW), which exceeds the 1mW standard.

### SUMMARY OF THE INVENTION

In accordance with one embodiment, a windshield display system is provided. The system includes a light source configured to project light from a plurality of source locations onto a desired location of a windshield. The number of source locations and relative spacing apart of the source locations is such that light emitted from the source locations and reflected into an eye of an operator is characterized as having a reflected light power less than a reflected power threshold. The light source is configured to project a distinct beam of light from each of the source locations onto the desired location. The system further comprises the windshield equipped with fluorescing material configured to emit light having a first wavelength when illuminated with light having a second wavelength.
The light source includes a single laser operable to emit a laser beam, one or more beam splitters configured to split the laser beam into distinct source beams for each of the source locations and a scanning mirror for each of the source locations, each scanning mirror operable to reflect one of the source beams to the desired location.
The light source includes a plurality of lasers, each operable to emit a source beam for each of the source locations and a scanning mirror for each of the source locations, each scanning mirror operable to reflect one of the source to the desired location.
The light source includes a single laser operable to emit a laser beam, a polarizing beam splitter configured to split the laser beam into a first p-polarized beam) and a second p-polarized beam, a first scanning mirror operable to reflect the first p-polarized beam to the desired location and a second scanning mirror operable to reflect the second p-polarized beam to the desired location. The system further comprises a controller configured to control light emitted from the source locations. The system further comprises a camera configured to view the desired location and communicate a signal indicative of an image of the desired location to the controller.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a perspective view of a vehicle equipped with a windshield display system in accordance with one embodiment;

Fig. 2 is a diagram of a light source for use in the system of Fig. 1 in accordance with one embodiment;

Fig. 3 is a diagram of a light source for use in the system of Fig. 1 in accordance with one embodiment; and

Fig. 4 is a diagram of a light source for use in the system of Fig. 1 in accordance with one embodiment.

### DETAILED DESCRIPTION

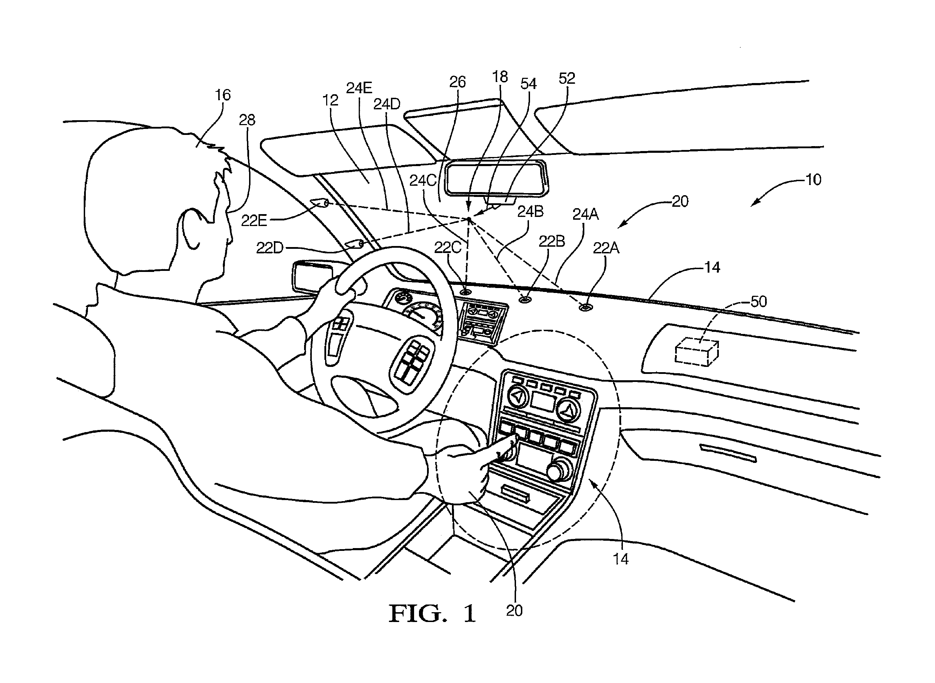

Fig. 1 illustrates a non-limiting example of a windshield display system, hereafter the system 10. In general, the system 10 is configured project an image onto a windshield 12 of a vehicle 14 so that the image projected can be observed by an operator 16 of the vehicle 14. This may include projecting light at a first wavelength, for example ultraviolet light, to induce a corresponding fluorescent image at a second wavelength, for example visible light. The system 10 overcomes the problems describe above by configuring a light source 20 to illuminate a desired location 18 on the windshield 12 with combined light originating from multiple source locations, for example source locations 22A, 22B, 22C, 22D, 22E. By illuminating the desired location 18 from a plurality of the source locations 22A, 22B, 22C, 22D, 22E that are spaced apart, adequate light power is provided to illuminate the desired location 18 with sufficient power to be seen in daylight conditions. Advantageously, a reflection of any individual light beam or source beam 24A, 24B, 24C, 24D, 24E originating from the source locations 22A 22B, 22C, 22D, 22E reflected toward an eye 28 of the operator 16 does not exceed published safety standards.

It should be appreciated that while Fig. 1 illustrates the desired location 18 as a single spot, by rapidly moving the desired location 18 about the windshield 12, the light beams or source beam 24A, 24B, 24C, 24D, 24E cooperate to illuminate an image that can be perceived by the operator 16. For example, an image of a navigation cue indicating that an upcoming turn should be taken, or displaying vehicle speed. It should also be appreciated that the source locations 22A 22B, 22C, 22D, 22E are illustrated as spaced apart sufficiently so that regardless of where the operator 16 could reasonably move his head, an eye 28 of the operator 16 could not receive more than one direct reflection of any of the light beams 24A, 24B, 24C, 24D, 24E.

By way of further example and not limitation, if each of the source locations 22A, 22B, 22C, 22D, 22E emitted ten milli-Watts (10mW) of light, the light beams 24A, 24B, 24C, 24D, 24E would combine at the desired location 18 and thereby provide a combined fifty milli-Watts (50mW) at the desired location. Most of the light power, for example ninety five percent (95%), is absorbed by the windshield 12 at the desired location 18. However, some of the light is reflected by the windshield similar to how light is reflected by a mirror. The reflected individual light from each of the light beams 24A, 24B, 24C, 24D, 24E would be five percent (5%) of the 10mW, or 0.5mW, which is below the safety threshold of 1mW. As such, the system 10 includes a light source 20 that is generally configured to project light from a plurality of sources 22 onto a desired location 18 of a windshield 12. The number of source locations and relative spacing apart of the source locations is such that light reflected in a particular direction (e.g. into the eye 28 of the operator 16) generally has a reflected light power less than a reflected power threshold, for example 1mW.

In general, the light source 20 emits light, and it is recognized that a windshield display system could be devised that relies on a light source emitting light at particular wavelengths such as ultraviolet (UV), infrared (IR), or visible wavelengths. By way of example and not limitation, the light source 20 may include a laser configured to emit violet light, for example a 405nm 50mW laser manufactured by Nichia Corporation located in Guangzhou, China, or a model RLTMDL-405-250-5 from Roither Laser Inc. located in Vienna, Austria. If the light source 20 is configured to emit UV or near UV (e.g. 405nm) light, the system 10 may advantageously include the windshield 12 being equipped with fluorescing material configured to generate emitted light having a different wavelength when illuminated with UV light, for example a fluorescing coating 26. In other words, the system 10 may be configured to generate emitted light having a first wavelength (e.g. green light) when illuminated with light having a second wavelength (e.g. UV or violet light). A suitable fluorescing coating is available from SuperImaging Inc. located in Fremont, California.

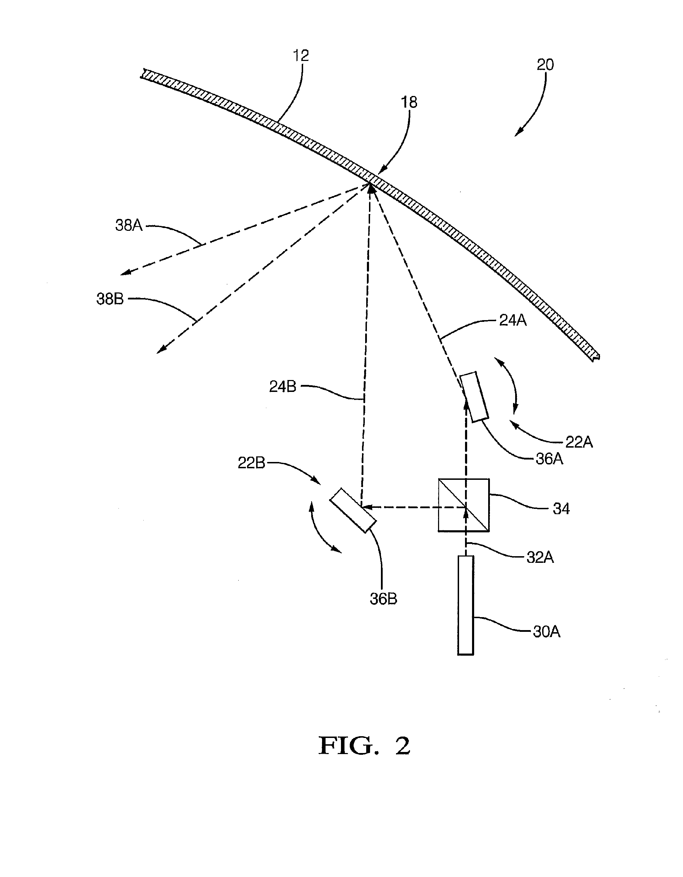

Fig. 2 illustrates a non-limiting example of how the light source 20 could be configured. This example includes a single laser 30A operable to emit a laser beam 32A. The light source 20 also includes a beam splitter 34 configured to split the laser beam 32 into distinct source beams 24A, 24B for each of the source locations 22A, 22B. The illustration shows one beam splitter 34 only for simplifying the illustration. It is contemplated that additional beam splitters would be incorporated to further divide the laser beam 32 into as many individual light beams as necessary so supply light to the source locations. A suitable beam splitter is part number CMI-BP145B1 available from Thorlabs located in Newton, New Jersey.

The light source 20 also includes a scanning mirror 36A, 36B for each of the source locations 22A, and 22B. Each scanning mirror 36A, 36B is operable to reflect one of the source beams 24A, 24B to the desired location 18. The scanning mirrors 36A, 36B are spaced apart sufficiently so that reflected beams 38A, 38B originating from the desired location 18 diverge so that an eye 28 of the operator 16 could not receive more than one of the reflected beams 38A, 38B.

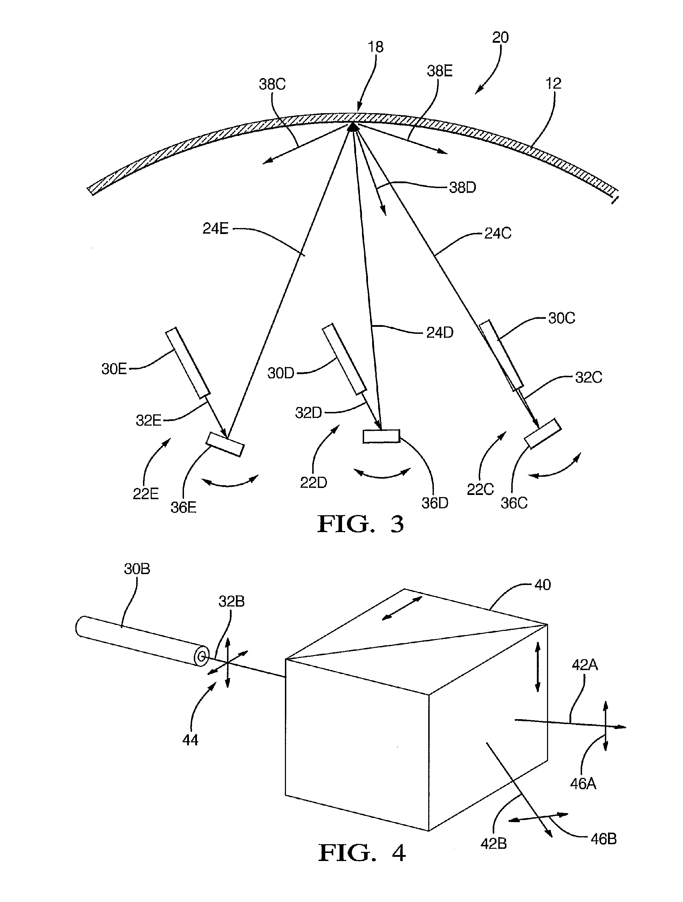

Fig. 3 illustrates another non-limiting example of how the light source 20 could be configured. This example includes a plurality of lasers 30C, 30D, 30E. Each of the lasers 30C, 30D, 30E is operable to emit a laser beam 32C, 32D, 32E, respectively, to provide a source beam 24C, 24D, 24E for each of the source locations 22C, 22D, 22E. The light from each laser is directed to a scanning mirror 36C, 36D, 36E for each of the source locations 22C, 22D, 22E. Each scanning mirror 36C, 36D, 36E is operable to reflect each one of the source beams 24C, 24D, 24E to the desired location 18. Again for this example, the scanning mirrors 36C, 36D, 36E are spaced apart sufficiently so that reflected beams 38C, 38D, 38E originating from the desired location 18 diverge so that an eye 28 of the operator 16 could not receive more than one of the reflected beams 38C, 38D, 38E.

The scanning mirrors 36A, 36B, 36C, 36D, 36E are illustrated as single mirror elements only to simplify the illustrations. It is recognized that two mirror elements are sometimes used to provide two degrees of freedom for directing the source beams 24A, 24B, 24C, 24D, 24E. As used herein, a scanning mirror is any device capable of varying the angle of the mirror relative to the source of light and the windshield 12 such that the source beams 24A, 24B, 24C, 24D, 24E scan the windshield in a manner effective to 'draw' an image. In other words, the scanning mirrors 36A, 36B, 36C, 36D, 36E are able to vary the desired location 18 on the windshield 12 such that the operator 16 viewing the windshield 12 may see an image, assuming that the windshield is configured to display an image when so illuminated. A suitable scanning mirror is a 4-Quadrant (bi-directional) actuator model no. 7MM available from Mirrorcle Technologies, Inc. located in Richmond, California.

Fig. 4 illustrates a non-limiting example of how the light source 20 of Fig. 2 could be alternatively configured. This example includes a single laser 30B operable to emit a laser beam 32B. Instead of the beam splitter 34 shown in Fig. 2, this example uses a polarizing beam splitter 40 configured to split the laser beam 32B into a first linearly polarized beam 42A and a second linearly polarized beam 42B. The polarizing beam splitter 40 may also be known as a Wollaston Prism, and may be formed of a calcite crystal. As known in the art, the linear polarization direction of one of these beams can be rotated to be the same as the polarization direction of the other beam by passing it through a suitably oriented half-wave plate. Accordingly, the apparatus can be oriented so both beams are incident on the windshield as p-polarized light, to minimize undesired reflectance. Light with an electric field in the plane of incidence may be referred to as p-polarized, pi-polarized, tangential plane polarized, or a transverse-magnetic (TM) wave. In general, the laser 30B emits a laser beam 32B that may be characterized as having uncontrolled polarization as indicated by the polarization arrows 44. The polarizing beam splitter 40 generally polarizes the emitted light beams so that the first beam 42A is characterized as having a first polarization as indicated by a first polarization arrow 46A, and the second beam 42B is characterized as having a second polarization distinct from the first polarization as indicated by a second polarization arrow 46B. The apparatus is configured so both beams are incident on the surface of the glass as p-polarized light. Referring to Fig. 2, it should be apparent that the first p-polarized beam 42A would be directed to the first scanning mirror 36A, and the second p-polarized beam 42B would be directed to the second scanning mirror 36B.

Providing polarized light may be advantageous because it has been observed that p-polarized light has substantially less reflection than the orthogonal polarization state (s-polarized light) when near the Brewster angle of approximately 50 degrees. As such, the first p-polarized beam 42A and the second p-polarized beam 42B can be combined into one p-polarized beam OR they can each be manipulated separately. Either way, by providing p-polarized light in a range of angles near the Brewster angle, and so particularly suitable for an automotive windshield display, reflection power is typically reduced by 50%. A suitable polarizing beam splitter is part number WP10 available from Thorlabs located in Newton, New Jersey.

Referring again to Fig. 1, the system 10 may also include a controller 50 configured to control light or source beams 24A, 24B, 24C, 24D, 24E originating or emitted from the source locations 22A 22B, 22C, 22D, 22E. The controller 50 may include a processor (not shown) such as a microprocessor or other control circuitry as should be evident to those in the art. The controller 50 may include memory (not shown), including non-volatile memory, such as electrically erasable programmable read-only memory (EEPROM) for storing one or more routines, thresholds and captured data. The one or more routines may be executed by the processor to perform steps for determining signals output by the controller 50 to control light or source beams 24A, 24B, 24C, 24D, 24E.

The system 10 may also include a camera 52 configured to view the desired location and communicate a signal (not shown) indicative of an image indicated by an arrow 54 of the desired location to the controller 50. The signal from the camera 52 may be used to align the source beams 24A, 24B, 24C, 24D, 24E output by the light source 20, or to detect if any of the source beams is obstructed. Further details of how the camera can be used to monitor the source beams 24A, 24B, 24C, 24D, 24E can be found in United States Patent Number 8,022,346 to Newman et al. issued September 20, 2011, the entire contents of which are hereby incorporated by reference herein.

Accordingly, a windshield display system 10 is provided. The system 10 projects light beams from several spaced apart locations toward a desired point so the desired point receives adequate illumination. Because the sources of light are spaced apart, the light power of any direct reflection is reduced in order to reduce the risk of damaging a person's eye that may receive a direct reflection. The use of p-polarized light not only improves safety by directly reducing the intensity of reflected light, but it also generally increases the fraction of light absorbed and thus increases the brightness of the fluorescent image seen by the operator 16. This increased brightness may allow a further reduction in the incident light power to further increase safety. Furthermore, distributing the incident light to multiple sources 22, the risk from direct exposure to a beam is further reduced since any single beam is less powerful. In addition, having light beams from multiple directions may increase the field of view in low-light conditions.

While this invention has been described in terms of the preferred embodiments thereof, it is not intended to be so limited, but rather only to the extent set forth in the claims that follow.

## Claims

1. A windshield display system (10) comprising:
a light source (20) configured to project light from a plurality of source locations (22A, 22B, 22C, 22D, 22E) onto a desired location (18) of a windshield (12), wherein the number of source locations (22A, 22B, 22C, 22D, 22E) and relative spacing apart of the source locations (22A, 22B, 22C, 22D, 22E) is such that light emitted from the source locations (22A, 22B, 22C, 22D, 22E) and reflected into an eye (28) of an operator (16) is characterized as having a reflected light power less than a reflected power threshold.

2. The system (10) in accordance with claim 1, wherein the light source (20) is configured to project a distinct beam of light (24A, 24B, 24C, 24D, 24E) from each of the source locations (22A, 22B, 22C, 22D, 22E) onto the desired location (18).

3. The system (10) in accordance with any previous claims wherein said system (10) further comprises the windshield (12) equipped with fluorescing material (26) configured to emit light having a first wavelength when illuminated with light having a second wavelength.

4. The system (10) in accordance with any previous claims, wherein the light source (20) includes :
a single laser (30A) operable to emit a laser beam (32);
one or more beam splitters configured to split the laser beam (32) into distinct source beams (24A, 24B) for each of the source locations (22A, 22B);
a scanning mirror (36A, 36B) for each of the source locations (22A, 22B), each scanning mirror (36A, 36B) operable to reflect one of the source beams (24A, 24B) to the desired location (18).

5. The system (10) in accordance with any previous claims, wherein the light source (20) includes :
a plurality of lasers (30C, 30D, 30E), each operable to emit a source beam (24C, 24D, 24E) for each of the source locations (22C, 22D, 22E);
a scanning mirror (36C, 36D, 36E) for each of the source locations (22C, 22D, 22E), each scanning mirror operable to reflect one of the source beams (24C, 24D, 24E) to the desired location (18).

6. The system (10) in accordance with any previous claims, wherein the light source (20) includes :
a single laser (30B) operable to emit a laser beam (32B);
a polarizing beam splitter (40) configured to split the laser beam (32B) into a first p-polarized beam (42A) and a second p-polarized beam (42B);
a first scanning mirror (36A) operable to reflect the first p-polarized beam (42A) to the desired location (18); and
a second scanning mirror (36B) operable to reflect the second p-polarized beam (42B) to the desired location (18).

7. The system (10) in accordance with any previous claims, wherein the system (10) further comprises a controller (50) configured to control light emitted from the source locations (22A, 22B, 22C, 22D, 22E).

8. The system (10) in accordance with claim 7, wherein the system (10) further comprises a camera (52) configured to view the desired location (18) and communicate a signal indicative of an image of the desired location (18) to the controller (50).
